# EUROPÄISCHE PATENTSCHRIFT

(11) **EP 1 630 116 B1**
(45) Veröffentlichungstag und Bekanntmachung des Hinweises auf die Patenterteilung: **29.10.2008**
(21) Anmeldenummer: 05107283.3
(22) Anmeldetag: 08.08.2005
(51) Int. Cl.: B65H 19/10

(54) **Klebeband zur Herstellung einer Splice-Verbindung**
Adhesive tape for the preparation of a splice joint
Ruban adhésif pour joint de raccordement

(30) Priorität: 24.08.2004 DE 102004040814
(43) Veröffentlichungstag der Anmeldung: 01.03.2006
(73) Patentinhaber: tesa AG, 20253 Hamburg (DE)
(72) Erfinder: Burmeister, Axel, 21244, Buchholz (DE); Nagel, Christoph, 22417, Hamburg (DE); Götz, Kerstin, 22547, Hamburg (DE)
(74) Vertreter: Stubbe, Andreas

(56) Entgegenhaltungen:
- EP-A- 1 223 133
- EP-A- 1 403 190
- EP-A1- 0 970 905
- WO-A-02/24562
- WO-A-20/04022468
- DE-A1- 19 841 609
- DE-A1- 19 956 442

## Beschreibung

Die Erfindung betrifft ein Klebeband zur Herstellung einer Splice-Verbindung gemäß dem Oberbegriff des Anspruches 1.

Flache, bahnförmige Materialien, insbesondere Papier, werden zu Rollen aufgewickelt, um beispielsweise einer papierverarbeitenden Maschine oder einer Druck- bzw. Verpackungsmaschine zugeführt zu werden. Um einen Dauerbetrieb der Anlage zu ermöglichen ist es notwendig, dass sobald eine erste Rolle des flachen, bahnförmigen Materials aufgebraucht ist, an das Ende dieser Materialbahn im fliegenden Wechsel den Beginn einer weiteren Materialbahn, die von einer neuen Rolle abgewickelt wird, anzusetzen und in geeigneter Weise zu verbinden, ohne beim Wechsel der Rollen die schnell laufenden Maschinen anhalten zu müssen. Dieser Vorgang wird als Spleißen (englisch: "to splice") bezeichnet. Hierfür werden vor allem in der Papierindustrie doppelseitig klebende Selbstklebebänder eingesetzt, die hochklebrig/tackig sind und die im Wesentlichen aus einer Trägerschicht bestehen, die jeweils an ihrer Ober- und Unterseite mit einer Selbstklebemasse versehen ist, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

In der Regel werden die Klebebänder in Handarbeit am Bahnanfang verklebt, die Verklebungen sind jedoch durch Abfolge von jeweils zwei Papierbahnen und einem Klebestreifen relativ dick, ein in der Papier-/Druckindustrie unerwünschtes Resultat. Des weiteren ist die Herstellung eines solchen Splices sehr kompliziert und birgt eine Menge Fehlerpotential.

Hierzu sind dem Fachmann unterschiedliche Vorgehensweisen und verschiedene Klebebänder bekannt, wobei auf eine exakte Ausführung der Verklebung zu achten ist, da ein Abreißen des bahnförmigen Materials zu unerwünschten und kostenintensiven Maschinenstillstandzeiten führen würde und die neue Materialbahn manuell in die Maschine eingeführt werden müsste.

Zur Verbesserung des Ergebnisses ist in der DE 198 41 609 A1 ein Klebeband mit einem spaltbaren System beschrieben, wobei ein Haftelement aus einem Basis- und einem Deckelement besteht. Das Basiselement umfasst ein sich bei Normalkraftbeanspruchung, das bedeutet, wenn eine Zugkraft im Wesentlichen senkrecht zur Hauptebene des Klebebands auf dieses ausgeübt wird, zwischen Ober- und Unterseite auftrennendes Material. Zwischen Ober- und Unterseite sind eine Vielzahl an Klebeschichtelementen aufgebracht, die nach dem Auftrennen der Verbindung durch die auf den Klebeschichtelementen verbleibenden Bestandteilen des Basiselementes jeweils abgedeckt werden, so dass diese Flächen nicht an weiteren Teilen des bahnförmigen Materials kleben bleiben können. Dieses Klebeband wird unter die oberste Lage einer neuen Rolle des bahnförmigen Materials verklebt und beim Spaltvorgang werden durch die punktförmig aufgebrachten Klebeschichtelemente Fasern aus einem über dieser Schicht liegenden Papierträger herausgerissen. Ein vergleichbares Klebeband ist in der EP 757 657 B1 offenbart. Hierbei trennen sich zwei vollflächig beschichtete Polymerschichten voneinander und geben so den Bahnanfang der neuen Papierrolle frei.

Die DE 199 02 179 A1 beschreibt ein einseitiges Klebeband, an dessen Unterseite ein doppelseitiges Klebeband in Streifenform unterklebt ist, mit einem Träger aus einem spaltfähigen Papier. Dieses spaltet unter der Krafteinwirkung des fliegenden Rollenwechsels und gibt so die neue Papierrolle frei und deckt gleichzeitig mit den gespaltenen Papieren die Klebemassen ab, so dass keine Störungen beim Maschinendurchlauf auftreten.

Bei der DE 101 23 981 A1 weist ein Klebeband zwei Spaltstreifen auf, die unterschiedliche Spaltkräfte aufweisen können, um auf unterschiedliche Flächengewichte des zu splicenden Materials reagieren zu können.

Bei allen vorstehend genannten Klebebändern werden diese unter eine äußere Lage auf der Rolle des bahnförmigen Materials verklebt. Hierbei muss jedoch darauf geachtet werden, dass diese äußere Lage dennoch faltenfrei auf der Rolle aufliegt, so dass diese Klebebänder nur mit hohem Aufwand an einer Rolle anbringbar sind.

Des Weiteren sind Klebebänder bekannt, die am Übergang zwischen äußerer Lage der Rolle und der darunter liegenden Lage der Rolle unmittelbar an der Schnittkante bzw. am Ende der äußeren Lage diesen Übergang überdeckend auf die Rolle geklebt werden. Hierfür weist das Klebeband, dessen Länge im Wesentlichen der Breite der Rolle entspricht, zwei unterschiedliche selbstklebende Systeme an seiner Unterseite bzw. an der Unterseite der Trägerschicht auf. Das erste System ist ein nicht spaltbares System und wird auf die äußere Lage der Rolle im Bereich der Schnittkante aufgeklebt. Das zweite System ist ein spaltbares Systems und wird auf die darunter liegende Lage oder Wicklung des bahnförmigen Materials auf der Rolle ebenfalls im Bereich der Schnittkante bzw. des Übergangs von der äußeren zur darunter liegenden Lage auf diese aufgeklebt. Die Oberseite des Klebebands ist in an sich bekannter Weise selbstklebend ausgeführt und beim fliegenden Rollenwechsel wird das Ende des bahnförmigen Materials der verbrauchten Rolle gegen diese Oberseite des Klebebandes angedrückt und verklebt. Somit wird durch das Bahnende der leeren Rolle das bahnförmige Material von der neuen Rolle abgezogen und am Übergang wird das zweite System aufgespaltet, wobei die auf der darunter liegenden Lage verbleibenden Reste eines Klebstoffs von dem aufgespaltenen System abgedeckt sind. Als nachteilig hierbei ist anzusehen, dass die Schnittkante der neuen Rolle exakt ausgeführt sein muss, da die beiden Systeme nur einen geringen Abstand voneinander aufweisen, um zu vermeiden, dass Teile der äußeren Lage auf der Rolle mit dem zweiten selbstklebenden System des Klebebands in Berührung kommen und dadurch beim Abwickeln des bahnförmigen Materials von der neuen Rolle die äußere Lage zerrissen wird. Dies ist nur mit dem Einsatz präziser Schneidwerkzeuge bzw. Maschinen mit dem entsprechenden Aufwand möglich.

Klebebänder, die von oben auf die oberste Papierlage verklebt werden, sind in DE 198 30 673 A1 beschrieben, aber auch dieses Klebeband weist deutliche Schwächen aufgrund des Produktaufbaus und der damit komplizierten Verklebung auf, da dieses Klebeband für die einwandfreie Funktionsweise sehr genau justiert werden muss und hier allenfalls eine automatische Applikation möglich ist. Dieses Klebeband muss bündig mit der vorderen Papierkante der neuen Papierrolle verklebt werden, da sonst die Selbstklebemasse auf der Unterseite des Hauptträgers die zweite Papierlage mit verklebt, was dann zu einem unkontrollierten Öffnen und somit zu Abrissen führt.

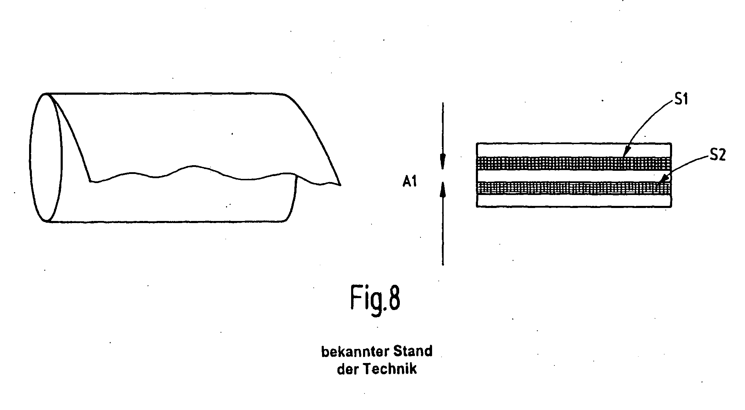

Des weiteren wird ein Klebeband vorgeschlagen, welches von oben appliziert wird, nämlich auf die oberste und zweite Lage eines neuen Papierballens. Dieses einseitig mit einer Selbstklebemasse auf einem Hauptträger beschichtete Klebeband trägt an seiner nicht klebenden Rückseite ein selbstklebendes spaltbares System S2, welches einen spaltfreudigen Papierträger aufweist, der beim Spliceverfahren spaltet und die jeweiligen Kleber abdeckt. Um eine Applikation von oben auf die oberste Lage der neuen Bahn zu ermöglichen, trägt das Klebeband an seiner nicht klebenden Rückseite ein nichtspaltendes, selbstklebendes System S1. Dieses Klebeband wird wie im Folgenden beschrieben auf die oberste Lage verklebt (Fig. 8):
- Zunächst werden die äußersten Windungen des Papierballens, die auf dem Transport beschädigt oder verschmutzt worden sein könnten, entfernt.
- Die nun äußerste, oberste Lage des neuen Papierballens muss in einer geraden Linie, möglichst in etwa aber nicht genau rechtwinklig zu den Seitenkanten des Ballens abgeschnitten werden. Um eine verlässliche Applikation zu ermöglichen, muss das Papier sehr genau abgeschnitten werden. Ungenauigkeiten in der Schnittkantenlinie dürfen dabei in ihren Abmessungen nicht größer sein als der Abstand A1 der beiden selbstklebenden Systeme S1 und S2 des zu applizierenden Klebebandes. Dies gestaltet sich in der Praxis jedoch recht schwierig und macht in der Regel den Einsatz eines Messers o. dgl. erforderlich.
- Das Klebeband wird nun in einer geraden Linie mit dem selbstklebenden, nichtspaltbaren System S1 auf die oberste Lage und mit dem spaltbaren, selbstklebenden System S2 in der Weise auf die zweitoberste Lage des Papierballens verklebt, dass der Bahnanfang, die Schnittkante des Papiers, genau zwischen den beiden selbstklebenden Systemen S1 und S2 liegt und der Beginn der neuen Bahn auf dem nichtklebendem Teil zwischen ihnen liegt. Sobald eine Verschiebung der Verklebung stattfindet, die zur Folge hat, dass ein Teil des selbstklebenden Systems S1 oder des selbstklebenden Systems S2 über den Anfang der Papierbahn hinaus verklebt werden, führt dies in jedem Fall zu einem Versagen des Splices, was wiederum teure Maschinenstillstände zur Folge hat.

Somit ist eine Anbringung eines derartigen Klebebandes nur maschinell möglich, denn eine manuelle Verklebung ist bereits bei geringen Bahnbreiten in dieser Genauigkeit nicht möglich. Der Einsatz von Automaten ist wiederum zum einen kostenintensiv und erfordert zusätzlichen Platzbedarf, so dass für viele potentielle Anwender ein solches Produkt nicht in Frage kommt.

Ausgehend von diesem Stand der Technik ist der Fachmann vor die Aufgabe gestellt, ein Klebeband anzugeben, mit dem ein fliegender Rollenwechsel in einfacher Weise durchführbar ist, wobei das zuverlässige und zerstörungsfreie Abwickeln des bahnförmigen Materials von der neuen Rolle gewährleistet ist. Zudem soll das Klebeband ohne maschinellen Einsatz handhabbar sein und es soll eine manuelle, einfache Applikation von oben auf die oberste Lage des zu splicenden Materials ermöglicht werden.

Diese Aufgabe wird durch die im Anspruch 1 angegebenen Merkmale gelöst.

Der Kerngedanke der Erfindung besteht darin, dass z. B. zum Herstellen einer Verbindung zwischen zwei flachen zu Rollen gewickelten bahnförmigen Materialien bei einem fliegenden Rollenwechsel auf der Unterseite der Trägerschicht ein spaltbares System aufgebracht ist, das wiederum mit einer weiteren Selbstklebemasse zur Verbindung mit den unterschiedlichen Lagen einer neuen Rolle des bahnförmigen Materials versehen ist. Dabei wird das Klebeband derart über den Übergang zwischen dem überlappenden Teil und dem darunter befindlichen überlappten Teil angeordnet bzw. aufgeklebt, dass dieser Übergang, über die Breite der Rolle gesehen, vollflächig oder teilflächig von dem Klebeband überdeckt ist. Wird nun in an sich bekannter Weise zum fliegenden Rollenwechsel die mit dem Klebeband versehene frische Rolle in Richtung auf das Bahnende einer leeren Rolle hin bewegt oder umgekehrt, so findet durch die Selbstklebemasse auf der Oberseite der Trägerschicht eine klebende Verbindung oder Verspleißung mit dem Bahnende der alten Rolle statt. Sobald das Bahnende beispielsweise in eine Papierverarbeitungsmaschine eingezogen wird, wird über diese Klebeverbindung und das Klebeband der Anfang der Bahn auf der neuen Rolle abgezogen. Hierbei erfolgt durch die im Wesentlichen in Normalrichtung, d. h. radial nach Außen, auf das spaltbare System einwirkenden Zugkräfte eine Aufspaltung des spaltbaren Systems, wobei der untere Teil des spaltbaren Systems auf der darunter angeordneten selbstklebenden Masse verbleibt und der obere Teil des spaltbaren Systems mit der Trägerschicht und der darüber angeordneten Selbstklebemasse nach oben abgezogen wird. Es versteht sich, dass die Haftkräfte der Selbstklebemassen jeweils entsprechend eingestellt sind.

Dabei spaltet das spaltbare System genau bis zum Bahnanfang der äußersten Wickellage. Durch das Abheben der äußersten Wickellage in radial nach außen gerichteter Richtung reißt genau am Bahnanfang der untere Teil des spaltbaren Systems und die darunter liegende Selbstklebemasse, die sich auf der zweiten Lage des Wickels befinden. Diese verbleiben nicht klebrig, da das spaltbare System die Selbstklebemasse abdeckt. Der nicht gespaltene Teil des spaltbaren Systems und die darunterliegende Selbstklebemasse auf der äußersten Lage des Wickels sind über den Träger und der auf dessen Oberseite befindlichen Selbstklebemasse mit der ablaufenden Bahn verbunden.

Dabei kann das spaltbare System und die darunter liegende Selbstklebemasse sowie das Spalten des unteren Teils des spaltbaren Systems in an sich beliebiger Weise oder wie im Folgenden beschrieben ausgebildet sein bzw. erfolgen.

Danach ist das erfindungsgemäße Klebeband so aufgebaut, dass es von oben auf die oberste Lage des aufgewickelten Flachbahnmaterials, z. B. Papierbahnmaterial, appliziert werden kann. Die vorliegende Erfindung bietet ein Klebeband an, welches aufgrund seines Aufbaus eine wesentlich geringere Dicke als die heute üblicherweise eingesetzten Klebebänder aufweist.

Auf der Unterseite des Klebebandes befindet sich das spaltbare System, bevorzugt über die gesamte Breite des Klebebandes, das auf der offenliegenden Seite ebenfalls selbstklebend ausgerüstet ist. Dieses spaltbare System spaltet beim Splice in der Art, dass keinerlei klebrige Rückstände verbleiben und den Maschinendurchgang des Splices nicht behindern.

Als Material für die Trägerschicht kann Papier oder Kunststofffolie eingesetzt werden, die insbesondere beschichtet und/oder metallisiert ausgeführt sein können. Es ist für den Fachmann ersichtlich, dass die Papiere oder Folien ausreichende Reißfestigkeiten aufweisen. Beispielsweise können schwach gekreppte Papiere, maschinenglatte Rohpapiere, einseitig gestrichene glatte Rohpapiere, beidseitig gestrichene, verdichtete, bedruckbare Dekorpapiere, einseitig doppelt gestrichene, holzfreie, hochglänzende Kraftpapiere, mit einer Metallfolie kaschierte Papiere, Polyesterfolien, MOPP-Folien, metallisierte Folien u. dgl. verwendet werden.

In einer Erweiterung der Erfindung ist die Trägerschicht des Klebebandes derart ausgerüstet, dass sie für die maschinelle Erkennung dient. In einer vorteilhaften Ausführungsform der Erfindung weist das Klebeband zumindest einen detektierbaren Zusatz auf. Hierzu ist die Trägerschicht des Klebebandes mit einem detektierbaren Merkmal ausgerüstet, das maschinell erkennbar ist. Dies ist insbesondere eine optische Markierung, beispielsweise farbliche Markierungen und/oder eine mit elektromagnetischen Mitteln detektierbare Markierung, wie ein Metallfaden. Somit kann im selbsttätigen Rollenwechsel der Bahnanfang durch die Markierung im Klebeband automatisch erkannt und die Rolle dementsprechend bewegt werden.

Vorteilhaft wird ein spaltfähiges System eingesetzt, welches eine deutlich geringere Spaltfestigkeit als derjenige Träger aufweist, der Zugkräfte aufnehmen muss. Das spaltfähige System besteht aus zumindest zwei Schichten, die sich unter einer bestimmten Krafteinwirkung, wie sie beim fliegenden Rollenwechsel auftritt, voneinander trennen, wobei eine der beiden Schichten aus dem Material des Hauptträgers gebildet werden kann, wie es z. B. der Fall ist, wenn als Hauptträger ein mit einer Metallfolie kaschiertes Papier oder eine Folie eingesetzt wird.

Der Vorteil der Erfindung besteht darin, dass das Klebeband in einfacher Weise und ohne übermäßige Präzision über das Ende des überlappenden Teils bzw. der äußeren Lage auf der Rolle des bahnförmigen Materials geklebt werden kann, wobei lediglich gewährleistet sein muss, dass das Klebeband auch in klebende Verbindung mit der darunter liegenden Bahn tritt. Die Übergangskante, die nicht notwendigerweise exakt gerade ausgeführt sein muss, muss lediglich innerhalb der Längskanten des Klebebands angeordnet sein. Außerdem ist es dadurch möglich, die Breite des Klebebands erheblich zu verringern, so das bis zu 50% Materialeinsparung im Vergleich zu Klebebändern, welche unter die oberste Lage appliziert werden, erreichbar sind. Auch ist dieses Klebeband gegenüber vergleichbaren Klebebändern wesentlich dünner ausführbar, so dass es durch das Klebeband nicht zu einer nicht gewollten Verdickung des Wickelmaterials und somit zu Problemen in der weiterverarbeitenden Maschine kommen kann.

Vorteilhafte Ausgestaltungen der Erfindung sind in den Unteransprüchen gekennzeichnet.

Nach einer weiteren erfindungsgemäßen Ausgestaltung wird vorgeschlagen, dass die weitere Selbstklebemasse an der Unterseite des Klebebands segmentiert wird. Dies kann beispielsweise dadurch erreicht werden, dass die Selbstklebemasse aus einer Vielzahl an eng benachbart angeordneter Klebepunkte und/oder Klebestreifen zusammengesetzt ist, wobei jeder der Klebepunkte entweder auf der äußeren oder der darunter liegenden Lage der Rolle aufgeklebt wird. Wird nun von der alten Rolle der obere Teil des Klebebands abgezogen tritt in dem Bereich der Klebepunkte, die auf die darunter liegende Lage der neuen Rolle aufgeklebt sind, eine Spaltung des spaltbaren Systems auf und am Übergang zum darüber liegenden überlappenden Teil der Rolle tritt ein Abreißen in der Selbstklebemasse bzw. der Mehrzahl der Klebepunkte und dem unteren Teil des spaltbaren Systems auf. Ebenso kann die Segmentierbarkeit auch mit einem im Folgenden beschriebenen brüchigen Lackssystem ausgeführt sein, das auf eine Trägeschicht aufgebracht ist.

Um eine Applikation von oben auf die oberste Lage des aufgewickelten Flachbahnmaterials zu ermöglichen, wird ein Spaltsystem eingesetzt, welches genau bis zum Übergang zweiter Lage zu oberste Lage, also Anfang des Bahnmaterials, spaltet, wobei der Spaltvorgang genau an diesem Punkt stoppt.

Dies wird durch das erfindungsgemäße Klebeband in der Weise ermöglicht, als dass ein brüchiges Lacksystem auf einem beschichtetem bzw. metallisierten Papierträger oder Folienträger aufgebracht wird, wobei die Trennkraft zwischen der Lackschicht und dem Träger so einzustellen ist, dass die Lackschicht beim Beschleunigen der neuen Rolle Flachbahnmaterial so hoch ist, dass ein Spalten verhindert wird und zum anderen aber ein Spalten eintritt, sobald die alte Bahn Flachbahnmaterial auf der Oberseite des Klebebandes anklebt und auf die Verklebung Kräfte einwirken, die ein Spalten zwischen Träger und Lackschicht zur Folge haben, wobei der Spaltvorgang jedoch exakt am Übergang zweiter zu oberster Lage Flachbahnmaterial unterbrochen wird.

Dabei reißt bei der in Segmenten beschichteten Klebemasse der Lack immer an den Stellen, an denen Klebemasse aufgebracht ist und deckt diese so ab, dass sie nicht klebend verbleibt. Dieser Spaltvorgang verläuft sicher immer nur bis zum Übergang der zweiten zur obersten Lage. Ist die oberste Lage erreicht, wird der Spaltvorgang unterbrochen und die Klebemasse auf der Oberseite des Trägermaterials stellt die sichere Verbindung der obersten Lage der neuen Rolle mit der alten Rolle her.

Bei einer vollflächigen Beschichtung mit Klebmasse spaltet der Lack immer vollflächig vom Träger bis zum Übergang von zweiter zu oberster Lage. Der Einsatz von Fasern und/oder Füllstoffen in der Selbstklebemasse ermöglicht ein Abreißen der Klebemasse exakt am Übergang von zweiter zu oberster Lage.

Dadurch, dass das spaltbare System eine Lackschicht aufweist, ist die Trennkraft zwischen der Lackschicht und der Trägerschicht derart einstellbar, dass die Lackschicht beim Beschleunigen der neuen Rolle des bahnförmigen Materials ausreichende Haftkräfte aufweist, um ein Spalten des spaltbaren Systems zu verhindern. Das bedeutet, dass durch die Fliehkräfte das Klebeband nicht vorzeitig spaltet. Ein Spalten des spaltbaren Systems tritt erst dann ein, wenn die Oberseite des Klebebandes zusätzlich mit dem Bahnende der alten Rolle verklebt und dadurch größere Kräfte in radialer Richtung ausgeübt werden, wobei auch hier der Spaltvorgang im spaltbaren System exakt am Übergang des überlappten Teils zum überlappenden Teil des bahnförmigen Materials unterbrochen wird. Dabei reißt bei der in Segmenten beschichteten Selbstklebemasse der Lack immer an den Stellen, an denen Selbstklebemasse aufgebracht ist, so dass durch den verbleibenden Lack die Selbstklebemasse abgedeckt wird.

Durch das bis zum Bahnanfang der äußersten Wickellage definiert einstellbare Spalten, bietet das erfindungsgemäße Klebeband die Möglichkeit, manuell von oben auf die neue Rolle Flachbahnmaterial appliziert werden zu können, ohne den Einsatz von automatischen Applizierhilfen, da die Verklebung sehr einfach ist, da sich der Bahnanfang der neuen Bahn nur irgendwo innerhalb der Längskanten des Klebebandes befinden muss. Es ist nicht notwendig, dieses Klebeband sehr genau zu positionieren. Zum anderen kann die Breite des Klebebandes um den Teil reduziert werden, der bei den Varianten zum Unterkleben benötigt wird, um die oberste Lage zu fixieren, was bis zu 50 % Breitenreduktion bedeuten kann. Damit bietet das Klebeband einen erheblichen Vorteil gegenüber dem Stand der Technik.

Zum Auftragen der Selbstklebemasse auf die Unterseite des Klebebands bzw. den unteren Teil des spaltbaren Systems ist vorgeschlagen, dass dies im Siebdruckverfahren erfolgt. Hierdurch ist es möglich, eine ausreichend große Anzahl voneinander getrennter Klebepunkte zu erhalten, die dennoch eine vollflächige Verklebung des Klebebands mit dem bahnförmigen Material ermöglichen.

Nach einer weiteren alternativen Ausgestaltung ist die Selbstklebemasse im Streifenstrich aufgetragen, wobei die Streifen im Wesentlichen in Längsrichtung des Klebebands und damit parallel zum Übergang zwischen den verschiedenen Lagen auf der Rolle verlaufen.

Bei beiden Verfahren ist dem Fachmann die Auswahl zur Verarbeitung geeigneter Selbstklebemassen mit ausreichenden Haftkräften möglich.

Als Materialien für die Selbstklebemasse kommen bevorzugterweise unter anderem Acrylathaftklebemassen zum Einsatz, die sowohl wasserlösliche als auch wasserunlösliche Acrylate sowie deren Dispersionen umfassen können. Weiterhin sind Natur- und Synthesekautschukmassen sowie deren Dispersionen vorgeschlagen. Prinzipiell können alle Basistypen von Haftklebemassen eingesetzt werden, die die erfinderischen Kriterien erfüllen.

Als Materialien für das spaltbare System kommen bevorzugterweise Acrylatdispersionen und/oder Polyvinylalkohole und/oder Methylcellulose und/oder deren Derivate zum Einsatz. Wird als Träger beispielsweise ein Papierträger eingesetzt, kann das spaltbare System aus einer auf diesen Träger aufgebrachten Acrylatdispersion und aus einer auf diese Schicht aufgebrachten weiteren Schicht Methylcellulose gebildet werden.

Durch das Auftragen der Selbstklebemasse im Siebdruck oder Streifenstrich oder durch sonstige Beschichtungstechniken, die eine nicht vollflächige Beschichtung erlauben, sind die Sollbruchstellen in der Selbstklebemasse im verklebten Zustand auf der neuen Rolle vorgegeben, da an genau der Lücke zwischen benachbarten Punkten der Selbstklebemasse, an der der Übergang in den verschiedenen Lagen der neuen Rolle angeordnet ist, es zu einem Abreißen sowohl in der Schicht der Selbstklebemasse als auch in dem dieser Schicht unmittelbar benachbarten unteren Teil des spaltbaren Systems kommt.

Es ist für den Fachmann ersichtlich, dass zur Handhabung und/oder Lagerung des Klebebands die Selbstklebemassen an der Ober- und Unterseite jeweils mit streifen- oder bahnförmigen Abdeckelementen, auch "Liner" genannt, versehen sein können, die vor den Klebevorgängen manuell abgezogen werden.

Die Klebebänder können zum Verkleben von Papier- und oder Kunststofffolienbahnen oder von sonstigem bahnförmigen Material verwendet werden.

Ein Ausführungsbeispiel der Erfindung wird nachstehend anhand der Zeichnungen näher erläutert. Es zeigen:
- Fig. 1: ein Klebeband in perspektivischer Darstellung,
- Fig. 2: eine Rolle eines bahnförmigen Materials,
- Fig. 3: das auf die Rolle aufgeklebte Klebeband,
- Fig. 4: die alte und die neue Materialbahn mit dem Klebeband vor dem Verkleben,
- Fig. 5: die verklebten Materialbahnen,
- Fig. 6: das Aufspalten des Klebebands,
- Fig. 7: ein aufgespaltetes Klebeband,
- Fig. 8: ein Klebeband nach dem Stand der Technik.

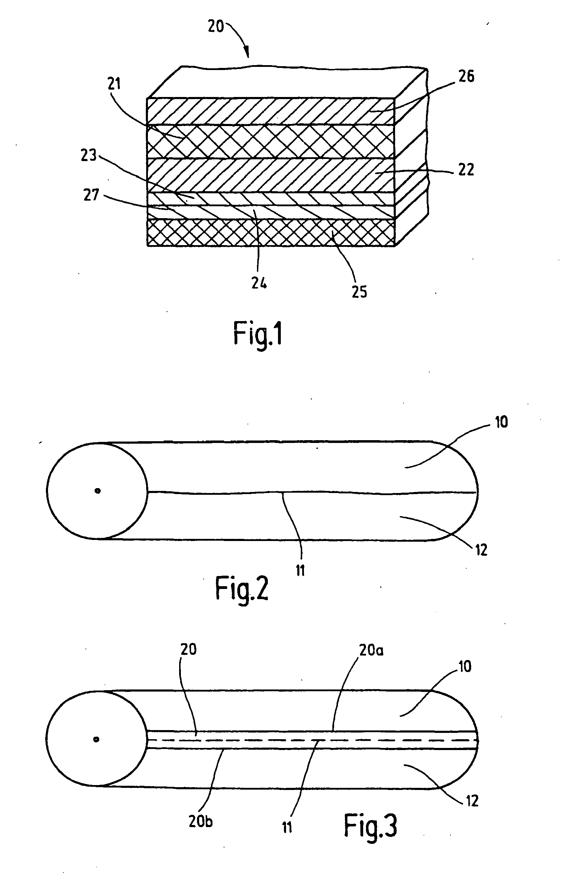

Bei dem in den Fig. 1 bis 7 dargestellten Ausführungsbeispiel der Erfindung handelt es sich um ein Klebeband 20, das eine Trägerschicht 22, beispielsweise eine beschichtete und/oder metallisierte Papier- oder Kunststofffolie, umfasst, an deren Oberseite eine Selbstklebemasse 21 aus einem hierfür geeigneten selbstklebenden Material im Wesentlichen vollflächig aufgebracht ist. Zur Handhabung des Klebebands ist die Selbstklebemasse 21 mit einem Abdeckelement 26, beispielsweise ebenfalls ein beschichtetes Papier oder eine beschichtete Folie, abgedeckt, um ein Festkleben des Klebebands 20 an nicht gewünschten Stellen zu vermeiden. An der Unterseite der Trägerschicht 22 ist vollflächig ein spaltbares System 23, 24, das im Wesentlichen aus zwei voneinander spaltbaren Schichten 23, 24 besteht, angeordnet und in beliebiger Weise an der Trägeschicht 22 befestigt, beispielsweise wiederum mit einer Selbstklebemasse festgeklebt. Der untere Teil des spaltbaren Systems 23, 24, nämlich die Schicht 24, ist an ihrer Unterseite wiederum mit einer weiteren Selbstklebemasse 25 versehen, um das Klebeband 20, wie im Folgenden beschrieben, auf eine Rolle eines bahnförmigen Materials zu kleben. Zwischen den Schichten 23, 24 des spaltbaren Systems ist die Trennebene 27 ausgebildet, an der das System 23, 24 im Folgenden gespalten oder aufgetrennt wird.

Aus der Darstellung in Fig. 2 ist eine Rolle eines flachen, bahnförmigen Materials ersichtlich, wie unter anderem eine Papierrolle, die einer Papierverarbeitungsmaschine, einer Druck- oder Verpackungsmaschine oder dergleichen zugeordnet ist. Auf der Rolle ist das bahnförmige Material in eng aneinander anliegenden Lagen aufgewickelt, wobei der überlappende Teil 10 den darunter angeordneten überlappten Teil 12 zumindest teilweise überdeckt. Das Ende des bahnförmigen Materials bildet einen Übergang 11 zwischen dem überlappenden Teil 10 und dem darunter liegenden überlappten Teil 12.

Zur Vorbereitung des Verspleißens oder Verklebens des Bahnanfangs bzw. der überlappende Teil 10 auf der Rolle mit dem Bahnende einer leeren Rolle, um einen fliegenden Rollenwechsel durchzuführen, damit ein kontinuierlicher Betrieb der nachgeordneten Maschine gewährleistet ist, wird der Übergang 11 mit dem Klebeband 20 derart überklebt, dass er zwischen den beiden Längskanten 20a, 20b des Klebebands 20 verklebt ist. Das bedeutet, dass der Übergang 11 innerhalb der Längskanten 20a, 20b verläuft und vom Klebeband 20 abgedeckt ist. Somit muss dieser Übergang 11 nicht maschinell exakt gerade ausgeführt sein sondern kann manuell beispielsweise gerissen oder mit einem Schneidmesser ausgeführt sein.

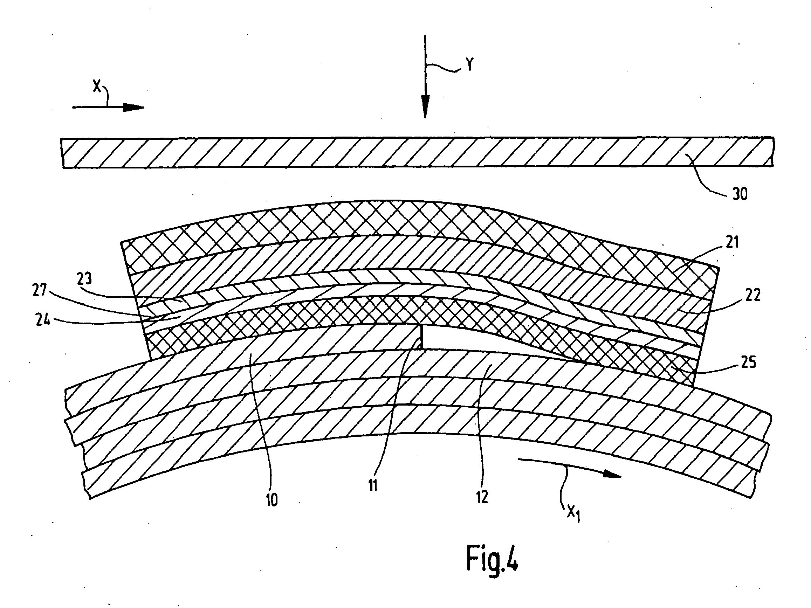

Aus der Querschnittsdarstellung in Fig. 4 ist dieser Zustand ersichtlich. Der überlappende Teil 10 endet an dem Übergang 11, wobei der überlappende Teil 10 nur bis zu diesem Übergang 11 den darunter liegenden überlappten Teil 12 überdeckt. Das Klebeband 20 ist derart auf das bahnförmige Material geklebt, dass ein Abschnitt des Klebebands 20 auf der äußeren Lage 10 und der andere Abschnitt auf der darunter liegenden Lage 12 aufgeklebt ist, dies erfolgt mit der Selbstklebemasse 25.

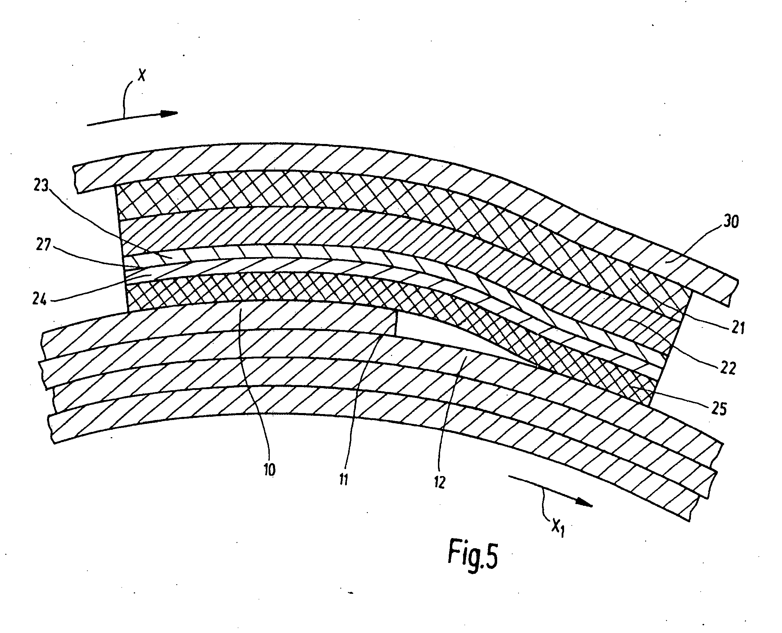

Um einen nahtlosen Übergang von der alten Bahn 30 auf den überlappenden Teil 10 von der neuen Rolle zu ermöglichen wird zuerst die neue Rolle auf eine ausreichende Winkelgeschwindigkeit beschleunigt, wie mit dem Pfeil X₁ angedeutet, damit im Bereich des Übergangs das neue bahnförmige Material im Wesentlichen die gleiche Geschwindigkeit aufweist wie das alte bahnförmige Material 30, nämlich bis zu 120 km/h bei einer Papierverarbeitungsmaschine, wie durch den Pfeil X verdeutlicht. Sobald sich diese Geschwindigkeit der Sollgeschwindigkeit angenähert hat wird die alte Materialbahn 30 in Y-Richtung bewegt, bis die freiliegende Selbstklebemasse 21, die Abdeckung 26 wurde vorher entfernt, in Berührung mit der Bahn 30 kommt und an dieser festklebt. Dieser Zustand ist aus Fig. 5 ersichtlich.

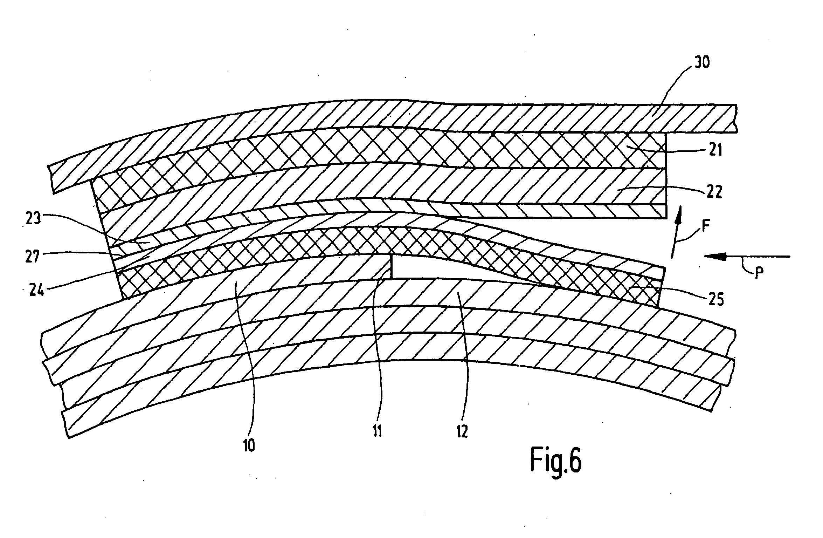

Sobald die Klebeverbindung zwischen der Selbstklebemasse 21 und der alten Bahn 30 hergestellt ist, folgt aufgrund der kreisförmigen Bewegung des auf eine Rolle aufgewickelten und mit dem Klebeband 20 auf dieser festgeklebten neuen Bahnmaterials gegenüber der im Wesentlichen linearen Bewegung der alten Bahn 30 eine Ausübung einer Zugkraft auf das Klebeband 20, wie in Fig. 6 durch den Pfeil F veranschaulicht. Durch diese Zugkraft erfolgt eine Aufspaltung des spaltbaren Systems 23, 24 entlang der Trennebene 27, die in Pfeilrichtung P durch das Klebeband 20 verläuft.

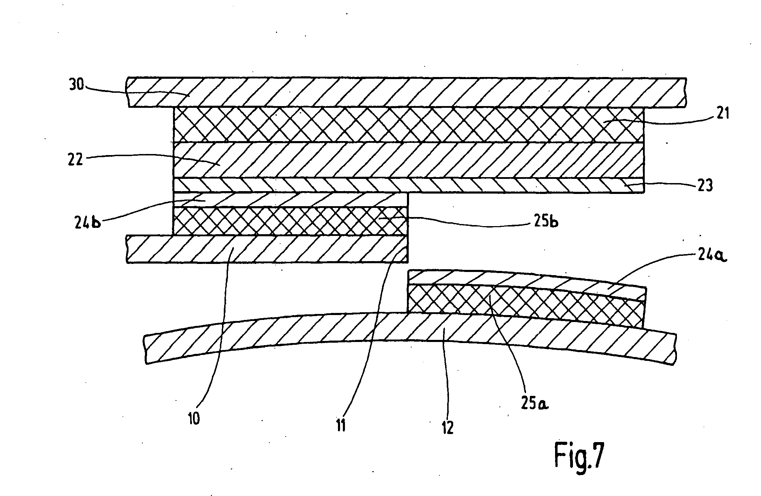

Dabei entsteht durch die radial nach außen wirkenden Kräfte in der Selbstklebemasse 25 eine Sollbruchstelle, die bewirkt, dass der Spaltvorgang, sobald der Übergang 11 zwischen dem überlappenden Teil 10 und dem darunter liegenden überlappten Teil 12 erreicht wird, die Selbstklebemasse 25 an der dort entstehenden Sollbruchstelle abreißt. Gleichzeitig ist die untere Schicht 24 des spaltbaren Systems 23, 24 derart ausgelegt, dass an der Stelle des Abreißens der Selbstklebemasse 25 auch die untere Schicht 24 abreißt und dementsprechend der Spaltvorgang an diesem Übergang von oberster zu zweiter Lage unterbrochen wird. Somit wird erreicht, dass der äußere überlappende Teil 10, wie in Fig. 7 abgebildet, von dem darunter liegenden überlappten Teil 12 abgehoben und von der alten Bahn 30 in linearer Richtung beispielsweise in eine Papierverarbeitungsmaschine hineingezogen wird. Dabei ist mit 24a der Teil des spaltbaren Systems 23, 24 bezeichnet, der den auf dem überlappten Teil 12 verbleibenden Teil der Selbstklebemasse 25a nichtklebend abdeckt. 24b ist der ungespaltene Teil des spaltbaren Systems 23, 24, der auf der Schicht 23 am Träger 22 verbleibt. Der die Verbindung des Klebebandes 20 zum überlappenden Teil 10 bzw. Material herstellende Teil der Selbstklebemasse 25 ist bei 25b angedeutet.

Aufgrund der Ausgestaltung des Klebebands 20 kann dieses wesentlich dünner als vergleichbare Klebebänder ausgebildet werden, so dass es nicht zu einer nicht gewollten Verdickung des Wickelmaterials in der nachgeordneten Maschine kommt. Zudem ist durch den verbleibenden Abschnitt der Schicht 24a, der mit dem Abschnitt der Selbstklebemasse 25a auf der darunter liegenden Bahn 12 festgeklebt bleibt, gewährleistet, dass diese Selbstklebemasse 25a nicht mit weiteren Teilen in klebende Berührung kommen kann.

Zur Ausbildung der Sollbruchstellen in der Selbstklebemasse 25 ist vorgeschlagen, dass die Selbstklebemasse 25 entweder im Siebdruck oder im Streifenstrich auf die Schicht 24 des spaltbaren Systems 23, 24 aufgebracht wird oder in einer sonstigen vom Fachmann ausgestaltbaren Weise, um eine Vielzahl voneinander abgetrennter Klebepunkte oder Klebestreifen zu erhalten, wobei die Sollbruchstelle jeweils zwischen den Klebepunkten gebildet ist, die einerseits auf den äußeren überlappenden Teil 10 und andererseits auf den darunter liegenden überlappten Teil 12 geklebt werden. Für das Abreißen der unteren Schicht 24 werden entweder geeignete Papiere gewählt, bei denen die Selbstklebemasse 25, die auf dem darunter liegenden überlappten Teil 12 aufgeklebt ist, eine derartige Zugkraft auf die Schicht 24 ausübt, dass am Übergang Fasern aus der Papierschicht 24 herausgerissen und diese abgeschert werden. Ebenso kann die Schicht 24 in Form eines brüchigen Lackes ausgeführt sein, der im Bereich des Überganges 11 in gewünschter Weise aufbricht, um die Schicht 24 abzureißen, so dass der Teil von Selbstklebemasse 25, welcher auf dem überlappten Teil 12 zurückbleibt, durch die darauf verbleibende Schicht 24 abgedeckt wird.

### BEZUGSZEICHENLISTE

- 10: überlappender Teil (= äußere Lage)
- 11: Übergang
- 12: überlappter Teil (= untere Lage)
- 20: Klebeband
- 20a, 20b: Längskanten des Klebebands
- 21: Selbstklebemasse
- 22: Trägerschicht
- 23: oberer Teil des spaltbaren Systems
- 24: unterer Teil des spaltbaren Systems
- 24a: der Teil des spaltbaren Systems, der den auf dem überlappten Teil 12 verbleibenden Teil der Selbstklebemasse (25a) nichtklebend abdeckt
- 24b: ungespaltener Teil des spaltbaren Systems (23, 24), verbleibt auf Schicht (23) am Träger (22)
- 25: weitere Selbstklebemasse
- 25a: auf dem überlappten Teil zurückbleibende Selbstklebemasse
- 25b: der die Verbindung des Klebebandes (20) zum überlappenden Material (10) herstellende Teil der Selbstklebemasse (25)
- 26: Abdeckelement
- 27: Trennebene
- 30: alte Bahn
- X, X₁, Y: Bewegungsrichtungen
- P: Spaltrichtung
- F: Zugkraft

## Patentansprüche

1. Klebeband (20) mit einem Trägermaterial (22), das auf der Oberseite mit einer Selbstklebemasse (21) beschichtet und auf der gegenüberliegenden Unterseite des Trägermaterials mit einem spaltbaren System (23, 24) ausgerüstet ist, das wiederum an dessen Unterseite mit einer weiteren Selbstklebemasse (25) ausgerüstet ist, zum Lösen einer überklebten Verbindung von sich überlappenden Materialien, insbesondere zur Herstellung einer Splice-Verbindung zwischen zwei flachen, zu Rollen gewickelten bahnförmigen Materialien bei einem fliegenden Rollenwechsel,
**dadurch gekennzeichnet,**
**dass** das spaltbare System (23, 24) bis zur Überlappung spaltet und am Punkt der Überlappung der beiden überklebten Materialien ein Teil des spaltbaren Systems (24) und auch die darunter liegende Selbstklebemasse (25) abreißen, so dass der auf dem überlappten Teil (12) verbleibende Rest (24a) des spaltbaren Systems (23, 24) die verbleibende Selbstklebemasse (25a) nichtklebend abdeckt.

2. Klebeband nach Anspruch 1,
**dadurch gekennzeichnet,**
**dass** die Selbstklebemasse (25) segmentiert aufgebracht wird und das spaltbare System somit definiert am Übergang von zweiter zu oberster Lage am nächsten liegenden Klebemassensegment aufhört zu spalten, wobei die Reste des spaltbaren Systems (24) die Selbstklebemasse (25) abdecken.

3. Klebeband nach Anspruch 2,
**dadurch gekennzeichnet,**
**dass** die weitere Selbstklebemasse (25) im Siebdruckverfahren aufgebracht ist.

4. Klebeband nach Anspruch 2,
**dadurch gekennzeichnet,**
**dass** die Selbstklebemasse (25) im Streifenstrich aufgebracht ist.

5. Klebeband nach Anspruch 1,
**dadurch gekennzeichnet,**
**dass** die Selbstklebemasse (25) vollflächig aufgebracht ist und das Abreißen der Klebemasse beim Stoppen des Spaltvorganges durch den Einsatz von Fasern und/oder Füllstoffen in der Selbstklebemasse sichergestellt wird.

6. Klebeband nach einem der Ansprüche 1 bis 5,
**dadurch gekennzeichnet,**
**dass** die Trägerschicht (22) aus Papier oder Kunststofffolie besteht, insbesondere beschichtet und/oder metallisiert ist.

7. Klebeband nach einem der Ansprüche 1 bis 6,
**dadurch gekennzeichnet,**
**dass** das Klebeband (20) ein detektierbares Merkmal, insbesondere ein optisch und/oder elektromagnetisch detektierbares Material, aufweist.

8. Klebeband nach einem der Ansprüche 1 bis 7,
**dadurch gekennzeichnet,**
**dass** das spaltbare System (23, 24) mindestens eine Lackschicht umfasst.

9. Klebeband nach einem der Ansprüche 1 bis 7,
**dadurch gekennzeichnet,**
**dass** das spaltbare System (23, 24) aus zwei Lackschichten gebildet wird.

10. Klebeband nach einem der Ansprüche 1 bis 7,
**dadurch gekennzeichnet,**
**dass** das spaltbare System (23, 24) aus einer Trägerschicht (22) und einer Lackschicht gebildet wird.

11. Klebeband nach einem der Ansprüche 1 bis 7,
**dadurch gekennzeichnet,**
**dass** das spaltbare System (23, 24) von einem Trägermaterial aus einem beschichteten oder metallisierten Papier- oder Folienträger mit einer Lackschicht gebildet ist.

12. Klebeband nach einem der Ansprüche 1 bis 5,
**dadurch gekennzeichnet,**
**dass** die Selbstklebemassen (21, 25) Acrylate, repulpierbare und/oder nicht repulpierbare Acrylate und/oder Natur- und/oder Synthesekautschukmassen umfassen.

13. Klebeband nach einem der Ansprüche 1 bis 12,
**dadurch gekennzeichnet,**
**dass** das spaltbare System (23, 24) Acryl-Polymerisate, Polyvinylalkohole oder Methylcellulose und deren Abkömmlinge umfassen.

14. Spliceverfahren, bei dem die oberste Papierbahn einer neuen Rolle mit einem Klebeband nach zumindest einem der Ansprüche 1 bis 13 überklebt wird, indem das auf der Rückseite des Klebebandes befindliche spaltbare System(23, 24) von oben auf den Übergang oberster zu zweitoberster Lage verklebt wird, wobei der Bahnanfang der neuen Papierbahn sich innerhalb der beiden Längskanten des Klebebandes befinden muss, worauf zur abschließenden Vorbereitung des Spliceverfahrens eine gegebenenfalls noch vorhandene Abdeckung entfernt wird, worauf die so ausgerüstete Papierrolle auf die gleiche Drehgeschwindigkeit wie die fast gänzlich abgespulte Papierrolle beschleunigt wird, dann gegen die alte Papierbahn gedrückt wird, wobei die offenliegende Selbstklebemasse der Vorderseite des Klebebandes mit der alten Papierbahn bei im wesentlichen gleichen Geschwindigkeiten der Papierbahnen verklebt, während zugleich das spaltbare System (23, 24) an der Unterseite des Klebebandes bis zum Bahnanfang der neuen Papierbahn spaltet und beide Selbstklebemassen, die auf ihm beschichtet sind, nicht klebend abdeckt.

## Claims

1. Adhesive tape (20) having a carrier material (22) which is coated on the upper side with a self-adhesive compound (21) and is finished on the opposite underside of the carrier material with a cleavable system (23, 24) which, in turn, is finished on its underside with a further self-adhesive compound (25), in order to release a connection of mutually overlapping materials bonded over each other, in particular for producing a splice connection between two flat web materials wound up into reels during a flying reel change, **characterized in that** the cleavable system (23, 24) cleaves as far as the overlap and, at the point of the overlap of the two materials bonded over each other, part of the cleavable system (24) and also the self-adhesive compound (25) located underneath tear off, so that the residue (24a) of the cleavable system (23, 24) that remains on the overlapped part (12) covers the remaining self-adhesive compound (25a) in a non-adhesive manner.

2. Adhesive tape according to Claim 1, **characterized in that** the self-adhesive compound (25) is applied in a segmented manner and the cleavable system thus stops cleaving in a defined way at the transition from the second to the uppermost layer at the nearest adhesive compound segment, the residues of the cleavable system (24) covering the self-adhesive compound (25).

3. Adhesive tape according to Claim 2, **characterized in that** the further self-adhesive compound (25) is applied in the screen printing process.

4. Adhesive tape according to Claim 2, **characterized in that** the self-adhesive compound (25) is applied by strip coating.

5. Adhesive tape according to Claim 1, **characterized in that** the self-adhesive compound (25) is applied over the entire area and the tearing-off of the adhesive compound when stopping the cleavage process is ensured by the use of fibres and/or fillers in the self-adhesive compound.

6. Adhesive tape according to one of Claims 1 to 5, **characterized in that** the carrier layer (22) consists of paper or plastic film, in particular is coated and/or metallized.

7. Adhesive tape according to one of Claims 1 to 6, **characterized in that** the adhesive tape (20) has a detectable feature, in particular a material that can be detected optically and/or electromagnetically.

8. Adhesive tape according to one of Claims 1 to 7, **characterized in that** the cleavable system (23, 24) comprises at least one varnish layer.

9. Adhesive tape according to one of Claims 1 to 7, **characterized in that** the cleavable system (23, 24) is formed from two varnish layers.

10. Adhesive tape according to one of Claims 1 to 7, **characterized in that** the cleavable system (23, 24) is formed from a carrier layer (22) and a varnish layer.

11. Adhesive tape according to one of Claims 1 to 7, **characterized in that** the cleavable system (23, 24) is formed by a carrier material of a coated or metallized paper or film carrier with a varnish layer.

12. Adhesive tape according to one of Claims 1 to 5, **characterized in that** the self-adhesive compounds (21, 25) comprise acrylates, repulpable and/or non-repulpable acrylates and/or natural and/or synthetic rubber compounds.

13. Adhesive tape according to one of Claims 1 to 12, **characterized in that** the cleavable system (23, 24) comprises acrylic polymers, polyvinyl alcohols or methyl cellulose and their derivatives.

14. Splicing method, in which the uppermost paper web of a new reel has stuck over it an adhesive tape according to at least one of Claims 1 to 13, in that the cleavable system (23, 24) located on the rear of the adhesive tape is stuck from above on the transition between the uppermost and the second uppermost layer, the web start of the new paper web having to be located within the two longitudinal edges of the adhesive tape, whereupon, for the purpose of the final preparation of the splicing method, a covering which may possibly still be present is removed, whereupon the paper reel equipped in this way is accelerated to the same rotational speed as the almost completely unwound paper reel, is then pressed against the old paper web, the exposed self-adhesive compound of the front side of the adhesive tape sticking to the old paper web at substantially identical speeds of the paper webs, while at the same time the cleavable system (23, 24) on the underside of the adhesive tape cleaves as far as the web start of the new paper web and covers in a non-adhesive manner both the self-adhesive compounds with which it has been coated.

## Revendications

1. Ruban adhésif (20) doté d'un matériel de support (22) revêtu sur son côté supérieur par une pâte autoadhésive (21) et doté sur le côté inférieur opposé au matériel de support d'un système refendable (23, 24) qui lui-même est doté sur son côté inférieur d'une autre pâte autoadhésive (25), pour libérer une liaison surcollée de matériaux superposés et en particulier pour établir une liaison d'épissure entre deux matériaux plats en forme de bande enroulés en rouleau lors d'un changement de rouleau à la volée,
**caractérisé en ce que**
le système refendable (23, 24) se refend jusqu'à la superposition et **en ce qu'**une partie du système refendable (24) et également la pâte autoadhésive (25) située par-dessous se déchirent à l'emplacement de superposition des deux matériaux surcollés de telle sorte que les résidus (24a) du système refendable (23, 24) qui restent sur la partie superposée (12) recouvrent de manière non adhésive les résidus de pâte adhésive (25a).

2. Ruban adhésif selon la revendication 1, **caractérisé en ce que** la pâte autoadhésive (25) est appliquée en segments et **en ce que** le système refendable cesse ainsi de manière définie de se refendre à la transition entre la deuxième couche et la couche supérieure sur le segment suivant de pâte adhésive, les résidus du système refendable (24) recouvrant la pâte autoadhésive (25).

3. Ruban adhésif selon la revendication 2, **caractérisé en ce que** l'autre pâte autoadhésive (25) est appliquée par sérigraphie.

4. Ruban adhésif selon la revendication 2, **caractérisé en ce que** la pâte autoadhésive (25) est appliquée en bandes.

5. Ruban adhésif selon la revendication 1, **caractérisé en ce que** la pâte autoadhésive (25) est appliquée sur toute la surface et **en ce que** la déchirure de la pâte adhésive lors de l'arrêt de l'opération de refendage est garanti par le recours à des fibres et/ou à des charges dans la pâte autoadhésive.

6. Ruban adhésif selon l'une des revendications 1 à 5, **caractérisé en ce que** la couche de support (22) est constituée de papier ou d'un film en matière synthétique et est en particulier revêtue et/ou métallisée.

7. Ruban adhésif selon l'une des revendications 1 à 6, **caractérisé en ce que** le ruban adhésif (20) présente un matériau détectable et en particulier un matériau détectable optiquement et/ou électromagnétiquement.

8. Ruban adhésif selon l'une des revendications 1 à 7, **caractérisé en ce que** le système refendable (23, 24) présente au moins une couche de vernis.

9. Ruban adhésif selon l'une des revendications 1 à 7, **caractérisé en ce que** le système refendable (23, 24) est formé de deux couches de vernis.

10. Ruban adhésif selon l'une des revendications 1 à 7, **caractérisé en ce que** le système refendable (23, 24) est formé d'une couche de support (22) et d'une couche de vernis.

11. Ruban adhésif selon l'une des revendications 1 à 7, **caractérisé en ce que** le système refendable (23, 24) est formé d'un matériau de support constitué d'un support revêtu ou métallisé en papier ou en film et doté d'une couche de vernis.

12. Ruban adhésif selon l'une des revendications 1 à 5, **caractérisé en ce que** les pâtes autoadhésives (21, 25) comprennent des acrylates, des acrylates repulpables et/ou non repulpables et/ou des pâtes de caoutchouc naturel et/ou de synthèse.

13. Ruban adhésif selon l'une des revendications 1 à 12, **caractérisé en ce que** le système refendable (23, 24) comprend des polymères acryliques, des poly(alcool vinylique) ou de la méthylcellulose ainsi que leurs dérivés.

14. Procédé d'épissure dans lequel la nappe supérieure de papier d'un nouveau rouleau est surcollée à l'aide d'un ruban adhésif selon au moins l'une des revendications 1 à 13 en collant le système refendable (23, 24) situé sur le côté arrière du ruban adhésif par le haut sur la transition entre la couche supérieure et la couche immédiatement suivante, le début de la nouvelle bande de papier devant se trouver à l'intérieur des deux bords longitudinaux de ruban adhésif, suite à quoi, pour ensuite préparer l'opération d'épissure, on enlève un recouvrement éventuellement encore présent et le rouleau de papier ainsi équipé est accéléré à la même vitesse de rotation que le rouleau de papier presque complètement épuisé et est ensuite repoussé contre l'ancienne bande de papier, la pâte autoadhésive exposée du côté avant du ruban adhésif adhérant sur l'ancienne bande de papier lorsque les bandes de papier ont essentiellement la même vitesse, tandis qu'en même temps le système refendable (23, 24) prévu sur le côté inférieur du ruban adhésif se refend jusqu'au début de la nouvelle bande de papier et recouvre de manière non adhésive les deux pâtes autoadhésives dont il est revêtu.
